(19) Europäisches Patentamt
European Patent Office
Office européen des brevets

(11) EP 2 897 762 B1

(12) EUROPEAN PATENT SPECIFICATION

(45) Date of publication and mention of the grant of the patent:
25.03.2020 Bulletin 2020/13

(51) Int Cl.:
B23K 35/32 (2006.01)   B23K 35/00 (2006.01)
C22C 14/00 (2006.01)   C22C 16/00 (2006.01)
C22C 30/00 (2006.01)

(21) Application number: 13770424.3

(22) Date of filing: 20.09.2013

(86) International application number:
PCT/EP2013/069582

(87) International publication number:
WO 2014/044800 (27.03.2014 Gazette 2014/13)

(54) **BRAZING ALLOYS**

LÖTLEGIERUNGEN

ALLIAGES À BRASER

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 20.09.2012 US 201261703420 P

(43) Date of publication of application:
29.07.2015 Bulletin 2015/31

(73) Proprietor: Morgan Advanced Ceramics, Inc.
Hayward, California 94544 (US)

(72) Inventor: ZIANI, Abdelouahab
Santa Clara, California 95050 (US)

(74) Representative: Phillips & Leigh LLP
Temple Chambers
3-7 Temple Avenue
London EC4Y 0DA (GB)

(56) References cited:
GB-A- 1 249 417     GB-A- 1 249 417
US-A- 4 148 669     US-A- 4 148 669
US-A1- 2006 131 359     US-A1- 2006 131 359
US-A1- 2011 211 987     US-A1- 2011 211 987

• HAO J ET AL: "Catalytic oxidation of cyclohexane over Ti-Zr-Co catalysts", APPLIED CATALYSIS A: GENERAL, ELSEVIER SCIENCE, AMSTERDAM, NL, vol. 368, no. 1-2, 31 October 2009 (2009-10-31), pages 29-34, XP026641977, ISSN: 0926-860X, DOI: 10.1016/J.APCATA.2009.08.007 [retrieved on 2009-08-13]

• DE OLIVEIRA M F ET AL: "Glass formation of alloys selected by lambda and electronegativity criteria in the Ti-Zr-Fe-Co system", JOURNAL OF ALLOYS AND COMPOUNDS, ELSEVIER SEQUOIA, LAUSANNE, CH, vol. 495, no. 2, 16 April 2010 (2010-04-16), pages 316-318, XP027018689, ISSN: 0925-8388 [retrieved on 2009-11-05]

• LEE J G ET AL: "Low-temperature brazing of titanium by the application of a Zr-Ti-Ni-Cu-Bebulk metallic glass (BMG) alloy as a filler", INTERMETALLICS, ELSEVIER SCIENCE PUBLISHERS B.V, GB, vol. 18, no. 1, 1 January 2010 (2010-01-01), pages 70-73, XP026675360, ISSN: 0966-9795, DOI: 10.1016/J.INTERMET.2009.06.012 [retrieved on 2009-07-10]

• BOTSTEIN O ET AL: "Brazing of titanium-based alloys with amorphous 25wt.%Ti-25wt.%Zr-50wt.%Cu filler metal", MATERIALS SCIENCE AND ENGINEERING A: STRUCTURAL MATERIALS:PROPERTIES, MICROSTRUCTURE & PROCESSING, LAUSANNE, CH, vol. 188, no. 1-2, 30 November 1994 (1994-11-30), pages 305-315, XP024169288, ISSN: 0921-5093, DOI: 10.1016/0921-5093(94)90386-7 [retrieved on 1994-11-30]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 897 762 B1

- NAKA M ET AL: "Joining mechanism of ceramics to metals using an amorphous titaniu-based filler metal", MATERIALS SCIENCE ENGINEERING, ELSEVIER SEQUOIA, LAUSANNE, CH, vol. 98, 1 February 1988 (1988-02-01), pages 407-410, XP025878571, ISSN: 0025-5416, DOI: 10.1016/0025-5416(88)90195-4 [retrieved on 1988-02-01]
- HUANG ET AL: "Effect of Co substitution for Ni on the Ti-Zr-(Ni,Co) pseudo-ternary quasicrystal formation", JOURNAL OF NON-CRYSTALLINE SOLIDS, NORTH-HOLLAND PHYSICS PUBLISHING. AMSTERDAM, NL, vol. 353, no. 16-17, 20 April 2007 (2007-04-20), pages 1670-1675, XP022036957, ISSN: 0022-3093, DOI: 10.1016/J.JNONCRYSOL.2007.01.034
- A RABINKIN ET AL: "AMORPHOUS Ti-Zr -BASE METGLASO BRAZING FILLER METALS", SCRIPTA METALLURGICA ET MATERIALIA, vol. 25, 1 January 1991 (1991-01-01), pages 399-404, XP055092583, U.S.A.
- HAO J ET AL: "Catalytic oxidation of cyclohexane over Ti-Zr-Co catalysts", APPLIED CATALYSIS A: GENERAL, ELSEVIER, AMSTERDAM, NL, vol. 368, no. 1-2, 31 October 2009 (2009-10-31), pages 29-34, XP026641977, ISSN: 0926-860X, DOI: 10.1016/J.APCATA.2009.08.007 [retrieved on 2009-08-13]
- DE OLIVEIRA M F ET AL: "Glass formation of alloys selected by lambda and electronegativity criteria in the Ti-Zr-Fe-Co system", JOURNAL OF ALLOYS AND COMPOUNDS, ELSEVIER SEQUOIA, LAUSANNE, CH, vol. 495, no. 2, 16 April 2010 (2010-04-16), pages 316-318, XP027018689, ISSN: 0925-8388 [retrieved on 2009-11-05]
- LEE J G ET AL: "Low-temperature brazing of titanium by the application of a Zr-Ti-Ni-Cu-Bebulk metallic glass (BMG) alloy as a filler", INTERMETALLICS, ELSEVIER SCIENCE PUBLISHERS B.V, GB, vol. 18, no. 1, 1 January 2010 (2010-01-01), pages 70-73, XP026675360, ISSN: 0966-9795, DOI: 10.1016/J.INTERMET.2009.06.012 [retrieved on 2009-07-10]
- BOTSTEIN O ET AL: "Brazing of titanium-based alloys with amorphous 25wt.%Ti-25wt.%Zr-50wt.%Cu filler metal", MATERIALS SCIENCE AND ENGINEERING: A, ELSEVIER, AMSTERDAM, NL, vol. 188, no. 1-2, 30 November 1994 (1994-11-30), pages 305-315, XP024169288, ISSN: 0921-5093, DOI: 10.1016/0921-5093(94)90386-7 [retrieved on 1994-11-30]
- NAKA M ET AL: "Joining mechanism of ceramics to metals using an amorphous titaniu-based filler metal", MATERIALS SCIENCE ENGINEERING, ELSEVIER SEQUOIA, LAUSANNE, CH, vol. 98, 1 February 1988 (1988-02-01), pages 407-410, XP025878571, ISSN: 0025-5416, DOI: 10.1016/0025-5416(88)90195-4 [retrieved on 1988-02-01]
- HUANG ET AL: "Effect of Co substitution for Ni on the Ti-Zr-(Ni,Co) pseudo-ternary quasicrystal formation", JOURNAL OF NON-CRYSTALLINE SOLIDS, NORTH-HOLLAND PHYSICS PUBLISHING. AMSTERDAM, NL, vol. 353, no. 16-17, 20 April 2007 (2007-04-20), pages 1670-1675, XP022036957, ISSN: 0022-3093, DOI: 10.1016/J.JNONCRYSOL.2007.01.034
- A Rabinkin ET AL: "AMORPHOUS Ti-Zr -BASE METGLASO BRAZING FILLER METALS", Scripta Metallurgica et Materialia, vol. 25, 1 January 1991 (1991-01-01), pages 399-404, XP055092583, U.S.A.

**Description**

This invention relates to brazing alloys and to methods of brazing.

Brazing is a joining process in which a filler metal is heated above its melting point and distributed between two or more close-fitting parts by capillary action without melting the parts. For best results the chemical composition of the filler metal is chosen to reduce any adverse reaction with the parts to be joined.

Brazing is performed in several different ways, for example:-

- Torch brazing - where the filler metal, often in the form of a rod or wire, is applied to the joint and melted with a torch
- Braze welding - which does not rely on capillary action but simply on flow of the filler metal.
- Furnace brazing - where the filler metal is placed in or close to the joint and an assembly of parts and filler metal is placed into a furnace where the filler metal melts and flows to make the joint between the parts.

For different applications:-

- different brazing temperatures apply according to the nature of the parts being joined [they must not melt or otherwise deteriorate at the brazing temperature];
- different chemical constituents are required to match the chemical composition of the parts [there must be no adverse reaction with the parts and chemical couples that might lead to corrosion need to be avoided or minimized]
- different physical characteristics are required [e.g. to match the coefficients of thermal expansion of the parts or, where the parts are of different material, to provide a gradation of properties across the joint].

Brazing of titanium alloy parts presents a particular problem, in that although titanium has a high melting point it undergoes a transformation from a close-packed hexagonal $\alpha$ phase to a body-centred cubic $\beta$ phase above a transformation temperature specific to that alloy.

It is important therefore to undertake brazing of titanium alloys below the transformation temperature of the alloy.

Mechanical properties of heat treatable titanium alloys may be altered greatly by process heat cycling. Selection of brazing cycles and filler alloys that are compatible with the heat treatments required for those alloys usually presents significant difficulty. Typically, it is recommended to conduct the brazing operation at a temperature 38 - 66° centigrade below the $\alpha$- $\beta$ transition temperature of the alloy being brazed

The majority of commercial titanium alloys used in aerospace and medical devices have a transition temperature in the range 880-1050 °C.

Conventional filler materials used for brazing assemblies of titanium and its alloys are mainly silver alloys with alloying additions of lithium, copper, aluminum or tin. There are also some commercial filler alloys such as silver-palladium, silver-aluminum, titanium-nickel, titanium-nickel-copper and titanium-zirconium-beryllium.

Besides being not cost effective materials, silver-palladium and silver-aluminum based filler alloys do not meet minimum joint strength specifications for key aerospace and defense applications.

Ti-Ni, Ti-Cu-Ni, Ti-Zr-Be and Ti-Zr-Ni-Be alloys either produce brittle joints that do not meet strength specifications (beryllium containing alloys) or exhibit liquidus temperatures higher than 900 °C and are therefore unusable for brazing below the $\alpha$- $\beta$ transition temperature (Ti-Ni and Ti-Cu-Ni alloys).

For those applications where brazing above the $\alpha$- $\beta$ transition temperature has been tolerated, Ti-Cu-Ni filler composition produced the best joint strength. The improved strength in those joints was ascribed to the formation of a Widmanstätten-type microstructure at the joint diffusion layer. The development of the Widmanstätten microstructure has been stated to be induced by the presence of copper.

Some conventional filler alloy constituent elements [e.g. Ni, Cu and Be [added for the purposes of improving: joint strength, molten filler flow and liquidus temperature depression]] are undesirable metals in biocompatible medical implants, thus restricting the use of those filler alloys for braze joining of medical devices.

Large titanium honeycomb sandwich structures having satisfactory strength have been successfully brazed using aluminum 3003 (AI-1.3%Mn) for applications below 316 °C. In joining applications requiring high degree of durability, fatigue strength, oxidation and corrosion resistance at higher temperatures, 871 to 927 °C (1600 to 1700 F) range, alloys such as 70Ti-15Cu-15Ni, 60Ti-20Cu-20Ni, 48Ti-48Zr-4Be, 43Ti-43Zr-12Ni-2Be and Ag-9Pd-9Ga have been used.

There are existing low melting point brazing alloys based on the Zr-Ti-Cu-Ni alloy family [see for example US2011/0211987]. However US2011/0211987 noted that Cu can be detrimental to durability of a titanium brazed assembly. It is believed that Cu weakens oxidation resistance of a braze at high temperature. Additionally, Ni has been suggested as potentially causing allergenic reactions.

US4148669 discloses Zr-Ti-Co alloys for use in polycrystalline or glassy form to produce materials having useful electrical and mechanical properties.

The inventor has developed a different class of alloys that comprises biocompatible metal elements (Ti, Zr, Co) that can be used for brazing titanium and/or titanium alloys to one or more of:-

- titanium

- titanium alloy
- other metals and alloys
- oxide or non-oxide ceramics
- glasses

at brazing temperatures below the α-β transition temperature of the titanium or titanium alloy being brazed. The invention is not restricted to these applications and the brazing alloys can be used for other metals or indeed above the α-β transition temperature for titanium alloys having a particularly low α-β transition temperature.

Accordingly the present invention provides alloys, alloy precursors, brazed articles, and methods of brazing as set out in the claims.

The invention is illustrated by way of the following non-limitative examples in the following description with reference to the drawings in which:-

Fig. 1 is a differential scanning calorimetry (DSC) trace for an alloy in accordance with the invention;

Fig. 2 is a differential scanning calorimetry (DSC) trace for an alloy foil in accordance with the invention;

Fig. 3 is a micrograph of part of a joint formed using an alloy according to the present invention;

Fig. 4 is a schematic diagram of relationships in a stacked structure;

Fig. 5 is a micrograph of a layered foil in accordance with the invention;

Fig. 6 is a graph indicating processing conditions for forming a powder brazing alloy in accordance with the invention.

## Example 1

An arc melted alloy sample was prepared comprising in weight% 45.02% Zirconium, 36.98% Titanium and 18.00% Cobalt [equivalent to an alloy composition $Ti_{0.492}Zr_{0.314}Co_{0.194}$]. This was tested in a differential scanning calorimeter and shown to melt around 860°C [peak at 858.9°C].

This low melting point is in marked contrast to the lowest melting point binary Ti-Zr alloy [reported by the ASM Alloy Phase Diagrams Center as at around the composition $Ti_{0.62}Zr_{0.38}$ (roughly Zr~54wt%, Ti~46wt%) which has a liquidus at about 1540°C].

The small peak in the DSC trace at about 1187°C represents nucleation of a solid phase upon cooling from the molten state. Therefore, when casting these alloys it is preferred to maintain a sufficiently high solidification rate to prevent the nucleation of high melting temperature phases. Cooling the molten alloy on the water cooled copper plate of an arc melter provides sufficiently fast cooling for this purpose, although the invention is not limited to this manner of manufacture.

## Example 2

A thin lamella (a sawn-off slice, 0.5 mm thick) of the arc melted sample of Example 1 was placed between two plates of Ti-6Al-4V base metal to form a test joint. The joint assembly was furnace brazed at 880 °C for 10 minutes under $0.266×10^{-6}$kPa [~2x10$^{-6}$ torr] vacuum. A sample of the brazed joint was polished and examined by optical microscopy to reveal the features of the joint. It can be seen that a diffusion layer 2 with a Widmanstäten-type microstructure is formed between the Ti-6Al-4V base metal 1 and filler metal 3. Formation of a Widmanstätten-type microstructure at the joint diffusion layer has been suggested as providing improved strength in brazes using Ti-Cu-Ni filler metals at above the α-β transition temperature.

## Example 3

The as-cast alloy ingot of Example 1 is too hard for further break down by cold rolling. Hot working of the material is undesirable or not possible due to the high reactivity of zirconium content to ambient atmosphere. However the alloying elements of the material may be combined to form a layered structure that can be hot rolled at a temperature that is just high enough to cause bonding of individual layers and prevent full inter-diffusion among said layers that would cause an increase in hardness of the structure.

For a given alloy weight composition, relative thicknesses of the amounts required can be determined as follows:

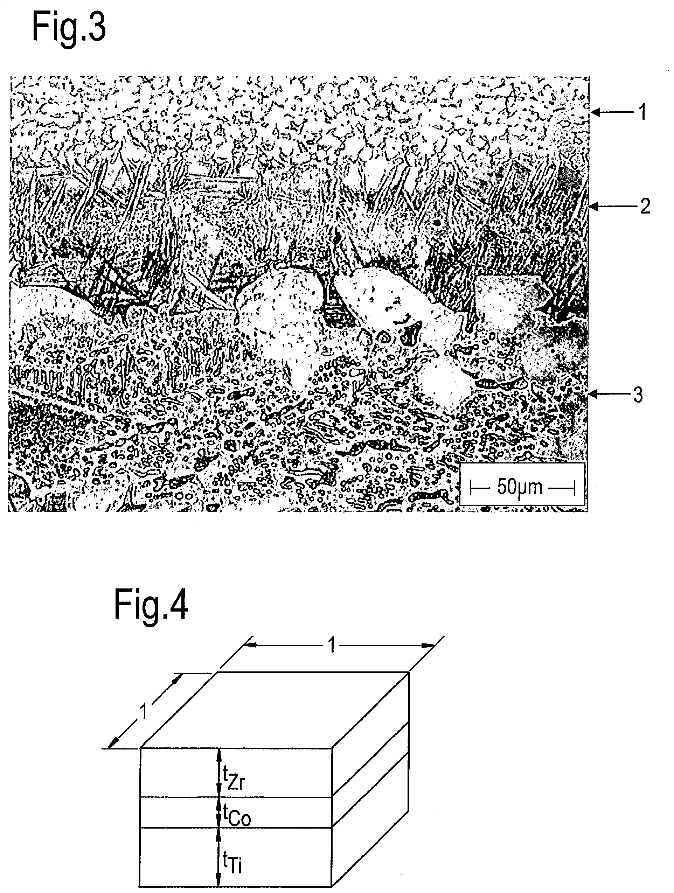

If an elemental cube of the layered structure having a unit face area as indicated in Figure 3 is considered, the relationships between the thicknesses of the layers can be determined by the following formulas:

$$t_{Co} = \frac{\rho_{Ti}}{\rho_{Co}} \cdot \frac{f_w^{Co}}{f_w^{Ti}} \cdot t_{Ti}$$

$$t_{Zr} = \frac{\rho_{Ti}}{\rho_{Zr}} \cdot \frac{f_w^{Zr}}{f_w^{Ti}} \cdot t_{Ti}$$

$t_i$: Layer thickness of constituent i

$\rho_i$: Theoretical density of constituent i

$f_w^i$: Weight fraction of constituent i

The invention is not limited to three layers of pure metal, and this formula merely gives the relative overall thicknesses required. More than three layers may be used as exemplified below. Two layers may be used if, for example, one at least of the layers comprises an alloy of two or more alloy constituents.

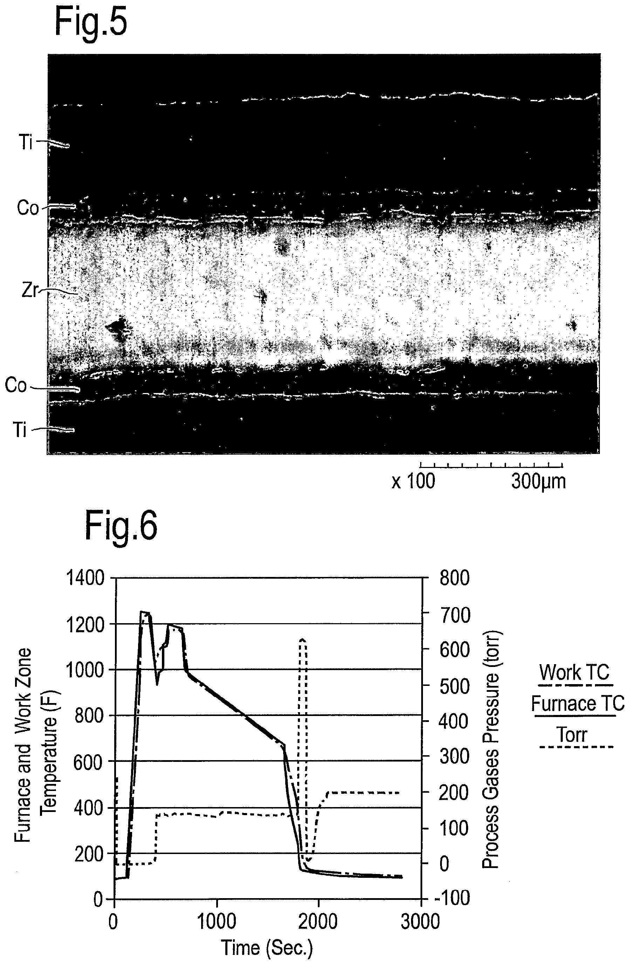

A 152mm [6.0"] wide x 508mm [20.0"] long plate assembly was built having a five layer Ti-Co-Zr-Co-Ti construction. The invention is not limited to any particular distribution of layers, but in this case: Zr formed the innermost layer, since Zr is more sensitive to oxidation at high temperatures experienced during rolling: two Co layers were provided, rather than one, to ensure a more even distribution of Co through the assembly than if a single layer were used. The layers comprised a 5.23mm [0.2058"] thick Zr plate, two 0.762mm [0.0300"] thick Co plates and two 6.18mm [ 0.2433"] thick titanium plates to meet the nominal composition of Zr45-Ti37-Co18 wt.%. Hot rolling process at 788°C [1450°F] was applied, including a sequence of 4 reductions with reheating to 788°C [1450°F] after each pass at 40% mill breakdown. Cold rolling was accomplished on a two high rolling mill through 5 thickness reductions of 10% including a full 5 hours annealing at 760°C [1400°F] in nitrogen atmosphere. Final thickness reduction to 0.508mm [0.02"] foil thickness was achieved by cluster mill rolling. The layered foil structure obtained through this process is shown in Figure 5. Chemical analysis of a foil sample indicated an actual composition of Zr45.07-Ti37.00-Co17.93 wt.%.

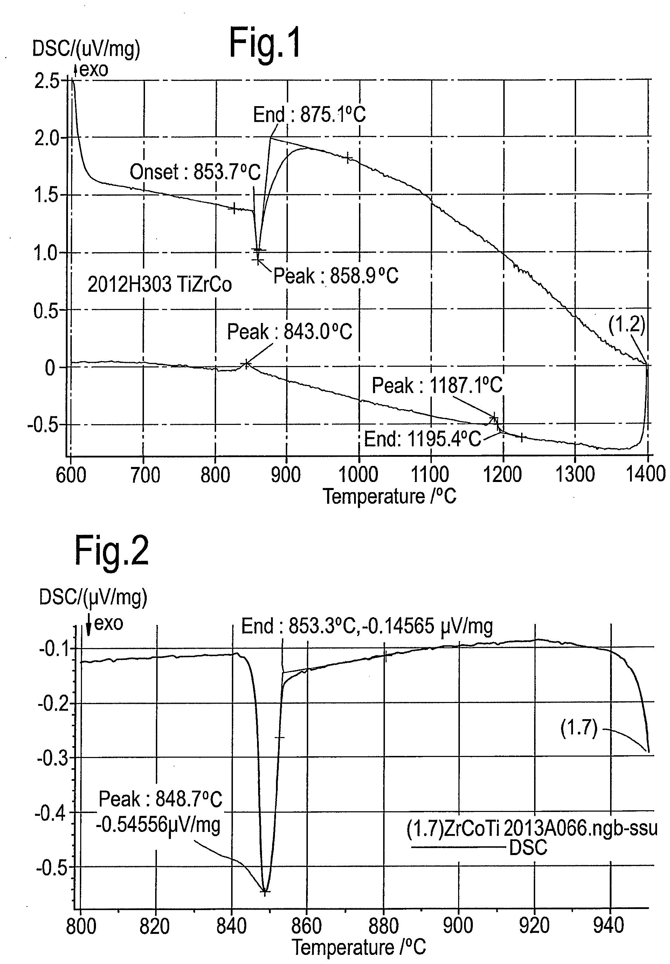

The differential scanning calorimetry (DSC) depicting the melting behavior of the layered foil is shown in Figure 2. The DSC trace indicate a liquidus temperature of 849 °C that is similar to the range detected for the laboratory sample made by arc melting.

## Example 4

A charge of 6.8kg [15 lbs] of alloy raw materials consisting of 3.07kg [6.75 lbs] of 99.9% pure thin zirconium strips, 2.52kg [5.55 lbs] of 99.95% pure titanium plate shearing drops and 1.22kg [2.70 lbs] of 99.95% pure pieces of electrolytic cobalt was melted under vacuum in a zirconia crucible and cast into a 0.75" thick ingot.

The cast material was subjected to hydride processing under pure hydrogen atmosphere at high temperature to form brittle compounds comprising titanium and zirconium hydrides. The hydride process chart is shown in Figure 6. A work thermocouple was inserted in the ingot, and a furnace thermocouple was situated in the furnace hot zone. When both work and furnace thermocouples indicated a temperature of 649°C [1200°F], hydrogen was introduced to a pressure of 53.3kPa [400 torr]. After a slight decrease in temperature below 538°C [1000°F] due to cold hydrogen chilling effect temperature started rising as a result of the exothermic reaction associated with hydride formation. At this point furnace power was turned off to allow the work zone to cool down to 204°C [400°F]. Further cooling and hydrogen purge was carried out with inert gas (argon) injection as seen by the gas pressure peak on the graph.

The hydrided material was easily crushed and milled into a -80 mesh powder that was subsequently sieved into a fraction of -100/+325 mesh powder for paste making.

Typically, brazing pastes are combinations of filler alloy powder, acrylic or wood flower based binders that pyrolize at or below 800 °C without leaving residues or ashes, suitably mixed with wetting agents such alcohol or other organic solvents. Any known paste components may be used with the powders of the present invention, as may any other suitable binders, solvents, and viscosity modifying materials.

## Further features

Further methods that may be used in the manufacturing of the materials include rapid solidification techniques, e.g. melt spinning either under vacuum or inert atmosphere; or inert gas atomization. It should be noted that nitrogen is not inert in this sense, as it can form nitrides with the molten metal.

The alloys of the invention comprise Zr, Ti and Co each of which are biocompatible metals. Other constituents may be included in the alloys and these are preferably biocompatible constituents. For example chromium and molybdenum may be added to improve corrosion resistance and strength. However minor amounts of non-biocompatible constituents may be tolerated for some applications.

At time of filing the provisional application, the applicant had not found a published complete phase diagram data for the ternary Ti-Zr-Co alloy system although a pseudo-binary diagram for the composition $Co_{0.667}Ti_{0.333-x}Zr_x$ with $0 \leq x \leq 0.333$ was available on the ASM International phase diagram data base [Diagram no.925431]. This shows melting points above 1200°C.

The individual Co-Ti and Co-Zr phase diagrams show eutectic compositions occurring at 1020 °C and 1200°C in the Ti-rich and Zr-rich regions respectively.

In the Ti-Zr phase diagram there is minimum melting point at 1540°C and a compositional atomic ratio Ti:Zr of about 61:39. The composition exemplified above corresponds to addition of cobalt to this compositional atomic ratio, as showing approximately a $(Ti_{61}Zr_{39})_{80}Co_{20}$ atomic composition that is equivalent to Ti36.74-Zr44.74-Co18.53 wt. %.

As the temperature-composition slope of the melting point for the Ti-Zr phase diagram is quite shallow, a broad range of Ti-Zr ratios around the minimum are expected to provide low melting point composition suitable for the brazing alloys of the present invention. Similarly a range of Co contents are expected to provide low melting point compositions suitable for the brazing alloys of the present invention.

Indeed, this expectation has been verified by a subsequently published article V.F. Khorunov, V.V. Voronov & S.V. Maksimova , Welding International (2013): Investigation of brazing alloys of the Ti-Zr-Co system, DOI: 10.1080/09507116.2013.796666 which in Figure 1 shows a calculated phase diagram showing a broad band of low melting point alloys.

The exemplified and related alloys within the general definition above are expected to be useful in brazing assemblies as indicated above. The alloys may be provided in any known form [including, but not limited to foil, strip, wire, paste, powder, preforms] and may particularly be useful in aerospace applications [e.g. Ti brazing on Nacelle components (reverse thrusters, sound panels, exhaust nozzles)] and in medical implantable devices to meet biocompatibility requirements.

**Claims**

1. An article comprising at least one component formed from titanium or titanium alloy brazed to at least one component formed from a material selected from the group metals, alloys, ceramics, or glasses, and comprising at least one brazed joint wherein the brazed joint is formed from an alloy having the composition $Ti_xZr_yCo_zR_{1-x-y-z}$, or an alloy precursor that on melting forms such alloy wherein

   R represents any element other than Ti, Zr, or Co

   $$0.182 \leq x \leq 0.718$$

   $$0.154 \leq y \leq 0.681$$

   $$0.08 \leq z \leq 0.3$$

   and

   $$0.96 \leq x+y+z < 1$$

   and in which R comprises or consists of biocompatible elements comprising one or more of Cr or Mo and incidental impurities.

2. An article as claimed in Claim 1, in which x is greater than 0.2 or greater than 0.25 or greater than 0.3 or greater than 0.35 or greater than 0.4.

3. An article as claimed in Claim 1 or Claim 2, in which x is less than 0.65 or less than 0.6 or less than 0.55 or less than 0.5.

4. An article as claimed in any of Claims 1 to 3, in which y is greater than 0.2 or greater than 0.25 or greater than 0.3.

5. An article as claimed in any of Claims 1 to 4, in which y is less than 0.65 or less than 0.6 or less than 0.55 or less than 0.5 or less than 0.45 or less than 0.4.

6. An article as claimed in any of Claims 1 to 5, in which z is greater than 0.1 or greater than 0.15.

7. An article as claimed in any of Claims 1 to 6, in which z is less than 0.25 or less than 0.2.

8. An article as claimed in any of Claims 1 to 7, in which x+y+z is greater than 0.97 or greater than 0.98 or greater than 0.99 or greater than 0.995

9. An article as claimed in any of Claims 1 to 8, in which the alloy has a liquidus at or below 880ºC.

10. An alloy having the composition $Ti_xZr_yCo_zR_{1-x-y-z}$, or an alloy precursor that on melting forms such alloy wherein
    R represents any element other than Ti, Zr, or Co

    $$0.182 \leq x \leq 0.718$$

    $$0.154 \leq y \leq 0.681$$

    $$0.08 \leq z \leq 0.3$$

    and

    $$0.96 \leq x+y+z < 1$$

    and in which R is comprises or consists of biocompatible elements comprising one or more of Cr or Mo and incidental impurities and that when melted in a brazing process with at least one component formed from titanium or titanium alloy and at least one component formed from a material selected from the group metals, alloys, ceramics, or glasses forms an article as claimed in any of Claims 1 to 9.

11. An alloy precursor as claimed in Claim 10, the precursor comprising two or more metal layers of different composition that when melted form an alloy as specified in any of Claims 1 to 9.

12. An alloy precursor as claimed in Claim 10, the precursor comprising at least one compound of at least one of the elements of the alloy.

13. An alloy precursor as claimed in Claim 12, in which the at least one compound comprises at least one hydride.

14. An alloy or alloy precursor as claimed in Claim 10, in the form of brazing alloy paste comprising a powder of the alloy or alloy precursor as claimed in Claim 10.

15. A method of joining at least one component formed from titanium or titanium alloy to at least one component formed from a material selected from the group metals, alloys, ceramics, or glasses, comprising the use in brazing of an alloy having the composition $Ti_xZr_yCO_zR_{1-x-y-z}$, or an alloy precursor that on melting forms such an alloy, wherein R, x,y, and z have the meaning specified in any of Claims 1 to 9, to form an article as claimed in in any of Claims 1 to 9.

16. A method as claimed in Claim 15 further comprising the step of heat treating the article subsequent to forming the at least one brazed joint.

**Patentansprüche**

1. Gegenstand, umfassend mindestens eine Komponente, die aus Titan oder einer Titanlegierung gebildet ist, die an mindestens eine Komponente gelötet ist, die aus einem Material ausgewählt aus der Gruppe Metalle, Legierungen, Keramiken oder Gläser gebildet ist, und umfassend mindestens eine gelötete Verbindung, wobei die gelötete Verbindung ist gebildet aus einer Legierung mit der Zusammensetzung $Ti_xZr_yCo_zR_{1-xyz}$ oder einem Legierungsvorläufer, der beim Schmelzen eine solche Legierung bildet
worin
R steht für ein beliebiges anderes Element als Ti, Zr oder Co

$$0{,}182 \leq x \leq 0{,}718$$

$$0{,}154 \leq y \leq 0{,}681$$

$$0{,}08 \leq z \leq 0{,}3$$

und

$$0{,}96 \leq x + y + z < 1$$

und worin R biokompatible Elemente umfasst oder daraus besteht, die eines oder mehrere von Cr oder Mo und zufälligen Verunreinigungen umfassen.

2. Gegenstand nach Anspruch 1, bei dem x größer als 0,2 oder größer als 0,25 oder größer als 0,3 oder größer als 0,35 oder größer als 0,4 ist.

3. Gegenstand nach Anspruch 1 oder 2, bei dem x kleiner als 0,65 oder kleiner als 0,6 oder kleiner als 0,55 oder kleiner als 0,5 ist.

4. Gegenstand nach einem der Ansprüche 1 bis 3, bei dem y größer als 0,2 oder größer als 0,25 oder größer als 0,3 ist.

5. Gegenstand nach einem der Ansprüche 1 bis 4, bei dem y kleiner als 0,65 oder kleiner als 0,6 oder kleiner als 0,55 oder kleiner als 0,5 oder kleiner als 0,45 oder kleiner als 0,4 ist.

6. Gegenstand nach einem der Ansprüche 1 bis 5, bei dem z größer als 0,1 oder größer als 0,15 ist.

7. Gegenstand nach einem der Ansprüche 1 bis 6, bei dem z kleiner als 0,25 oder kleiner als 0,2 ist.

8. Gegenstand nach einem der Ansprüche 1 bis 7, bei dem x + y + z größer als 0,97 oder größer als 0,98 oder größer als 0,99 oder größer als 0,995 ist

9. Gegenstand nach einem der Ansprüche 1 bis 8, bei dem die Legierung einen Liquidus bei oder unter 880ºC aufweist.

10. Eine Legierung mit der Zusammensetzung $Ti_xZr_yCo_zR1_{-x-y-z}$ oder ein Legierungsvorläufer, der beim Schmelzen eine solche Legierung bildet
worin
R steht für ein beliebiges anderes Element als Ti, Zr oder Co

$$0{,}182 \leq x \leq 0{,}718$$

$$0{,}154 \leq y \leq 0{,}681$$

$$0{,}08 \leq z \leq 0{,}3$$

und

$$0{,}96 \leq x + y + z < 1$$

und worin R biokompatible Elemente umfasst oder daraus besteht, die eines oder mehrere von Cr oder Mo und zufälligen Verunreinigungen umfassen, und das, wenn es in einem Lötprozess mit mindestens einer Komponente aus Titan oder einer Titanlegierung und mindestens einer Komponente aus einem Material geschmolzen wird ausgewählt aus der Gruppe Metalle, Legierungen, Keramiken oder Gläser bildet einen Gegenstand nach einem der Ansprüche 1 bis 9.

11. Legierungsvorläufer nach Anspruch 10, wobei der Vorläufer zwei oder mehr Metallschichten unterschiedlicher Zusammensetzung umfasst, die, wenn sie geschmolzen sind, eine Legierung nach einem der Ansprüche 1 bis 9 bilden.

12. Legierungsvorläufer nach Anspruch 10, wobei der Vorläufer mindestens eine Verbindung von mindestens einem der Elemente der Legierung umfasst.

13. Legierungsvorläufer nach Anspruch 12, wobei die mindestens eine Verbindung mindestens ein Hydrid umfasst.

14. Legierung oder Legierungsvorläufer nach Anspruch 10 in Form einer Hartlotpaste, umfassend ein Pulver der Legierung oder Legierungsvorläufer nach Anspruch 10.

15. Verfahren zum Verbinden mindestens einer Komponente aus Titan oder einer Titanlegierung mit mindestens einer Komponente aus einem Material ausgewählt aus der Gruppe Metalle, Legierungen, Keramiken oder Gläser, umfassend die Verwendung beim Hartlöten einer Legierung mit der Zusammensetzung $Ti_xZr_yCo_zR_{1-xyz}$ oder ein Legierungsvorläufer, der beim Schmelzen eine solche Legierung bildet, wobei R, x, y und z die in einem der Ansprüche 1 bis 9 angegebene Bedeutung haben, um einen Gegenstand nach einem der Ansprüche 1 bis 9 zu bilden .

16. Verfahren nach Anspruch 15, ferner umfassend den Schritt des Wärmebehandelns des Gegenstands nach dem Bilden der mindestens einen Lötverbindung.

**Revendications**

1. Article comprenant au moins un composant formé de titane ou d'alliage de titane brasé à au moins un composant formé d'un matériau choisi dans le groupe des métaux, alliages, céramiques ou verres, et comprenant au moins un joint brasé dans lequel le joint brasé est formé à partir d'un alliage ayant la composition $Ti_xZr_yCo_zR_{1-xyz}$, ou d'un précurseur d'alliage qui lors de la fusion forme un tel alliage où
R représente tout élément autre que Ti, Zr ou Co

$$0,182 \leq x \leq 0,718$$

$$0,154 \leq y \leq 0,681$$

$$0,08 \leq z \leq 0,3$$

et

$$0,96 \leq x + y + z < 1$$

et dans lequel R comprend ou est constitué d'éléments biocompatibles comprenant un ou plusieurs Cr ou Mo et impuretés accidentelles.

2. Article selon la revendication 1, dans lequel x est supérieur à 0,2 ou supérieur à 0,25 ou supérieur à 0,3 ou supérieur à 0,35 ou supérieur à 0,4.

3. Article selon la revendication 1 ou la revendication 2, dans lequel x est inférieur à 0,65 ou inférieur à 0,6 ou inférieur à 0,55 ou inférieur à 0,5.

4. Article selon l'une quelconque des revendications 1 à 3, dans lequel y est supérieur à 0,2 ou supérieur à 0,25 ou supérieur à 0,3.

5. Article selon l'une quelconque des revendications 1 à 4, dans lequel y est inférieur à 0,65 ou inférieur à 0,6 ou inférieur à 0,55 ou inférieur à 0,5 ou inférieur à 0,45 ou inférieur à 0,4.

6. Article selon l'une quelconque des revendications 1 à 5, dans lequel z est supérieur à 0,1 ou supérieur à 0,15.

7. Article selon l'une quelconque des revendications 1 à 6, dans lequel z est inférieur à 0,25 ou inférieur à 0,2.

8. Article selon l'une quelconque des revendications 1 à 7, dans lequel x + y + z est supérieur à 0,97 ou supérieur à 0,98 ou supérieur à 0,99 ou supérieur à 0,995.

9. Article selon l'une quelconque des revendications 1 à 8, dans lequel l'alliage a un liquidus égal ou inférieur à 880 ° C.

10. Un alliage ayant la composition $Ti_xZr_yCo_zR_{1-x-y-z}$, ou un précurseur d'alliage qui lors de la fusion forme un tel alliage
où
R représente tout élément autre que Ti, Zr ou Co

$$0,182 \leq x \leq 0,718$$

$$0,154 \leq y \leq 0,681$$

$$0,08 \leq z \leq 0,3$$

et

$$0,96 \leq x + y + z < 1$$

et dans laquelle R comprend ou consiste en des éléments biocompatibles comprenant un ou plusieurs Cr ou Mo et impuretés accidentelles et qui, lorsqu'ils sont fondus dans un procédé de brasage avec au moins un composant formé de titane ou d'alliage de titane et au moins un composant formé d'un matériau choisi dans le groupe des métaux, alliages, céramiques ou verres forme un article selon l'une quelconque des revendications 1 à 9.

11. Précurseur d'alliage selon la revendication 10, le précurseur comprenant deux ou plusieurs couches métalliques de composition différente qui, une fois fondues, forment un alliage tel que spécifié dans l'une quelconque des revendications 1 à 9.

12. Précurseur d'alliage selon la revendication 10, le précurseur comprenant au moins un composé d'au moins un des éléments de l'alliage.

13. Précurseur d'alliage selon la revendication 12, dans lequel le au moins un composé comprend au moins un hydrure.

14. Alliage ou précurseur d'alliage selon la revendication 10, sous forme de pâte d'alliage de brasage comprenant une poudre de l'alliage ou du précurseur d'alliage selon la revendication 10.

15. Procédé de jonction d'au moins un composant formé de titane ou d'alliage de titane à au moins un composant formé d'un matériau choisi dans le groupe des métaux, alliages, céramiques ou verres, comprenant l'utilisation au brasage d'un alliage ayant la composition $Ti_x Zr_y CO_z R_{1-xyz}$, ou un précurseur d'alliage qui, lors de la fusion, forme un tel alliage, dans lequel R, x, y et z ont la signification spécifiée dans l'une quelconque des revendications 1 à 9, pour former un article selon l'une quelconque des revendications 1 à 9 .

16. Procédé selon la revendication 15, comprenant en outre l'étape de traitement thermique de l'article après la formation de l'au moins un joint brasé.

Fig.1

Fig.2

# Fig.3

# Fig.4

## Fig.5

x 100        300µm

## Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110211987 A

- US 4148669 A

**Non-patent literature cited in the description**

- **V.F. KHORUNOV ; V.V. VORONOV ; S.V. MAKSI-MOVA.** Investigation of brazing alloys of the Ti-Zr-Co system. *Welding International,* 2013